# EUROPEAN PATENT SPECIFICATION

(11) **EP 0 440 997 B1**
(45) Date of publication and mention of the grant of the patent: **05.03.1997**
(21) Application number: 90203139.2
(22) Date of filing: 27.11.1990
(51) Int. Cl.: C08G 67/02

(54) **Process for the preparation of polyketone polymers**
Verfahren zur Herstellung von Polyketonpolymeren
Procédé de préparation de polycétones

(30) Priority: 28.11.1989 NL 8902934
(43) Date of publication of application: 14.08.1991
(73) Proprietor: SHELL INTERNATIONALE RESEARCH MAATSCHAPPIJ B.V., 2596 HR Den Haag (NL)
(72) Inventor: Mastenbroek, Barend, NL-1031 CM Amsterdam (NL); Petrus, Leonardus, NL-1031 CM Amsterdam (NL); Rosenbrand, Gerrit Gerardus, NL-1031 CM Amsterdam (NL)

(56) References cited:
- EP-A- 0 339 744
- EP-A- 0 340 844
- EP-A- 0 360 359
- EP-A- 0 361 623

## Description

The invention relates to a process for the preparation of polymers of carbon monoxide with one or more olefinically unsaturated compounds.

The relevant polymers are linear polymers, in which the units originating in carbon monoxide and the units originating in the olefinically unsaturated compounds occur substantially in alternating order. These polymers can be prepared by contacting the monomers at an elevated temperature and pressure with a catalyst in the presence of a diluent in which the polymers are insoluble or virtually insoluble, and in which the polymers thus form a suspension.

For some years, the Applicant has been carrying out extensive research into this polymer preparation. Initially, the research was substantially directed towards catalyst improvement. The experiments required for this research were substantially carried out in small reactors containing less than 1 kg diluent. In order to ensure thorough mixing of the reaction components, these reactors were provided with a stirring device. The stirring speed was, quite arbitrarily, set at a rather high level. In view of the relatively low costs associated with stirring in small reactors, no attention was paid in the past to the question as to whether the same or virtually the same polymerization result might be achieved with slower stirring.

With a view towards commercial scale polymer preparation, some of the polymerization experiments have, for some time, been conducted in larger reactors containing more than 10 kg diluent. With the use of these reactors, and to a much greater extent with the use of commercial-scale reactors containing more than 1,000 kg diluent, the costs associated with stirring in such reactors play an important role.

Before changing from small reactors to larger reactors containing more than 10 kg diluent, an investigation was carried out in order to find out which relationship exists, in the use of the latter reactors, between the power transmitted by the stirring device to the polymer suspension (hereinafter termed "power density" for short and expressed in kW/m³) on the one hand and the polymerization results on the other hand. It was established that when the power density is increased, a sharp rise in the polymerization rate initially occurs until a point is reached at which the polymerization rate amounts to approximately 90% of the maximum value. When the power density is increased still further, only a slight further rise in the polymerization rate occurs until finally the maximum polymerization rate is reached. The investigation revealed that, for a stirred reactor with a geometry suitable for homogenizing suspensions, the power density at which the polymerization rate amounts to approximately 90% of the maximum value is below 0.5 kW/m³. This can be illustrated with the aid of the results of a batchwise polymerization in a reactor with a volume of 100 l containing 45 kg diluent and a continuous polymerization in a reactor of 150 l containing 60 kg diluent. In the case of the batchwise polymerization, it was found that when the power density was increased by 100% from 0.25 to 0.5 kW/m³, the polymerization rate increased by approximately 150%, whereas when the power density was further increased by 50% from 0.5 to 0.75 kW/m³, the polymerization rate increased by approximately 5% only. In the case of the continuous polymerization, it was found that when the power density was increased consecutively by 50% from 0.5 to 0.75 kW/m³ and by 66% from 0.75 to 1.25 kW/m³, no increase in the polymerization rate occurred.

As no indications had been obtained that it could be of any use to carry out polymerizations in reactors containing more than 10 kg diluent at power densities of more than 0.5 kW/m³, after the change from small reactors to larger reactors containing more than 10 kg diluent, power densities of not more than 0.5 kW/m³ were used.

One of the most important properties of the alternating polymers is the bulk density. This plays an important role in the preparation, the purification, the storage, the transport and the processing of the polymers. As far as the polymer preparation is concerned, the rule of thumb is that the maximum permissible suspension concentration, expressed in kg polymer per 100 kg suspension, is about one-tenth of the the bulk density expressed in kg/m³. This means that, in the preparation of a polymer with a bulk density of 100 kg/m³, the maximum suspension concentration is about 10, whereas in the preparation of a polymer with a bulk density of 500 kg/m³, the maximum suspension concentration is about 50. This means that a quintupling of the bulk density offers the possibility of preparing about five times the quantity of polymer in a certain reactor volume. As far as the polymer purification, such as filtering, washing and drying, is concerned, the quantity of adhering liquid is largely determined by the polymer bulk density. Thus it has been found, for example, that a polymer with a bulk density of 100 kg/m³ binds approximately 5 kg diluent or washing liquid per kg, whereas that quantity is only about 0.25 kg for a polymer with a bulk density of 500 kg/m³. This is of great importance on account of the quantity of liquid that must be used in washing the polymers and the quantity of liquid that must be removed when the polymers are dried. As far as transport and storage are concerned, the rule is that the higher the polymers' bulk density, the more attractive the flow behaviour they will have and the less space they will occupy. As far as the processing of the polymers into shaped objects is concerned, it is often the case that polymers with a low bulk density cause problems in the processing apparatus. Polymers with a low bulk density must often be compacted, for example by extrusion, in order to make them suitable for further processing in the usual equipment. Polymers with a high bulk density may not need prior treatment and may be suitable for further processing as they are.

It has now been found that the bulk density of the alternating polymers, when prepared in reactors containing more than 10 kg diluent, is greatly dependent on the power density used in the preparation. It has been found that when power densities of more than 1.5 kW/m³ are used, i.e. power densities amounting to more than three times those applied hitherto, polymers with a high bulk density can be prepared. It has further been found that when the power density is increased to the range higher than 1.5 kW/m³, a sharp increase in the bulk density occurs. This is surprising in view of the fact that in the range below 1.5 kW/m³ an increase of the power density entails only a slight increase in the bulk density. This can be illustrated with the aid of the results obtained in the course of the batchwise and continuous polymerizations, referred to above, in 100 and 150 l reactors. During the batchwise polymerization, it was found that with a 50% increase of the power density from 0.5 to 0.75 kW/m³, the bulk density increased by only about 5% from 180 to 190 kg/m³, whereas with a 100% increase of the power density from 2 to 4 kW/m³ the bulk density increased by 20% from 250 to 300 kg/m³. During the continuous polymerization, it was found that with a 50% increase of the power density from 0.5 to 0.75 kW/m³, the bulk density increased by only about 7.5% from 130 to 140 kg/m³, whereas with a 100% increase of the power density from 2 to 4 kW/m³ the bulk density increased by approximately 50% from 210 to 310 kg/m³.

The present patent application therefore relates to a process for the preparation of polymers in which linear polymers of carbon monoxide with one or more olefinically unsaturated compounds, in which polymers the units originating in carbon monoxide and the units originating in the olefinically unsaturated compounds occur substantially in alternating order, are prepared by contacting the monomers at an elevated temperature and pressure with a catalyst in a reactor provided with a stirring device and containing more than 10 kg of a diluent in which the polymers are insoluble or virtually insoluble, with the power density during polymerization amounting to more than 1.5 kW/m³ polymer suspension.

In the process of the invention, the power density must be more than 1.5 kW/m³. Preferably, the power density is 2-15 kW/m³ and in particular 2.5-10 kW/m³.

Polymer preparation according to the invention can be conducted both batchwise and continuously.

It is known that in the batchwise preparation of the polymers in question, reactor fouling can be effectively combated by, before contacting the monomers with the catalyst, suspending a polymer having substantially the same composition as the polymer to be prepared in the diluent in a quantity given by the formula a≥100xbxc, in which a denotes the number of grams of the polymer per litre diluent, b the number of metres of the polymer's mean particle size and c the number of kg/m³ of the polymer's bulk density. If the polymer preparation according to the invention is accomplished batchwise, it is likewise preferred to make use of this finding.

If the polymer preparation according to the invention is accomplished continuously, it is preferably conducted in two or more reactors connected in series, each provided with a stirring device, with the power density amounting to more than 1.5 kW/m³ in at least one of the reactors. If desired, a power density of more than 1.5 kW/m³ can be used in more than one of the reactors connected in series. If the polymer preparation according to the invention is accomplished continuously in reactors connected in series, preferably not more than three reactors are used.

In the process of the invention, a catalyst is used which is capable of catalysing the formation of the linear alternating polymers mentioned hereinbefore, starting from a mixture of carbon monoxide and one or more olefinically unsaturated compounds. Catalysts that are suitable for the present purpose are, inter alia, those including a Group VIII metal. In the present patent application, Group VIII metals are understood to be the noble metals ruthenium, rhodium, palladium, osmium, iridium and platinum, as well as the iron group metals iron, cobalt and nickel. Preference is given to catalysts which include palladium, nickel or cobalt as Group VIII metal. Special preference is given to palladium as the Group VIII metal. If the catalysts that are used in the process of the invention comprise a Group VIII metal, they are incorporated in the catalyst preferably in the form of a salt of a carboxylic acid, in particular in the form of an acetate.

In addition to a Group VIII metal, the catalysts preferably include a bidentate ligand which can form a complex with the Group VIII metal via two phosphorus-containing, nitrogen-containing or sulphur-containing dentate groups. When a nitrogen bidentate ligand is used, preference is given to compounds of the general formula 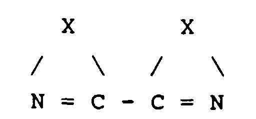 wherein X represents an organic bridging group containing three or four atoms in the bridge at least two of which are carbon atoms, such as 2,2'-bipyridine and 1,10-phenanthroline. When use is made of a sulphur bidentate ligand, it is preferred to use compounds of the general formula R¹S-R-SR¹, wherein R¹ is an optionally polarly-substituted hydrocarbyl group and R is a bivalent organic bridging group which has at least two carbon atoms in the bridge, such as 1,2-bis-(ethylthio)ethane and cis-1,2-bis(benzylthio)ethane. Preference is given to the use of phosphorus bidentate ligands of the general formula (R¹)₂P-R-P(R¹)₂, wherein R and R¹ have the meanings given hereinbefore. Further it is preferred to use such phosphorus bidentate ligands in which R¹ represents an aromatic hydrocarbyl group having at least one alkoxy substituent in a position ortho in respect to the phosphorus atom. A compound which is very suitable for the present purpose is 1,3-bis[bis(2-methoxyphenyl)phosphino]propane.

When a nitrogen or sulphur bidentate ligand is used in the catalysts, the applied quantity is preferably 0.5-100 and in particular 1-50 mol per mol of Group VIII metal. When a phosphorus bidentate ligand is used, the applied quantity is preferably 0.5-2 and in particular 0.75-1.5 mol per mol of Group VIII metal.

In addition to a Group VIII metal and a phosphorus, nitrogen or sulphur bidentate ligand, the catalysts preferably include an anion of an acid with a pKa of less than 6, more preferably an anion of an acid with a pKa less than 4 and in particular an anion of an acid with a pKa of less than 2. Examples of suitable acids with a pKa of less than 2 are sulphonic acids, such as para-toluenesulphonic acid, and halocarboxylic acids, such as trifluoroacetic acid. The anion of an acid with a pKa of less than 6 can be incorporated in the catalysts in the form of an acid and/or in the form of a salt of a non-noble transition metal such as a chromium or iron salt. The anion is preferably present in the catalysts in a quantity of 1-100 and in particular 2-50 mol per mol of Group VIII metal.

Apart from catalysts on the basis of the three components named hereinbefore, viz. a) a Group VIII metal compound, b) an acid with a pKa of less than 6 or a non-noble transition metal salt thereof, and c) a bidentate ligand containing two phosphorus-containing, nitrogen-containing or sulphur-containing dentate groups, use may also be made of corresponding catalysts based on two components by combining components a) and b), such as by the use of palladium trifluoroacetate or palladium para-tosylate or by combining the components b) and c), such as by the use of ortho(diphenyl-phosphino)benzenesulphonic acid or 3-(diphenyl-phosphino)propane sulphonic acid.

In order to increase the activity of the Group VIII metal containing catalysts, a 1,4-quinone may be additionally incorporated therein. For that purpose, 1,4-benzoquinone and 1,4-naphthoquinone are very suitable. The quantity of 1,4-quinone used preferably amounts to 5-5,000 and in particular 10-1,000 mol per mol Group VIII metal.

Olefinically unsaturated compounds that can be polymerized with carbon monoxide by using the process of the invention are compounds consisting exclusively of carbon and hydrogen as well as compounds which contain, in addition to carbon and hydrogen, one or more hetero-atoms. The process of the invention is preferably applied for the preparation of polymers of carbon monoxide with one or more olefinically unsaturated hydrocarbons. Examples of such suitable hydrocarbon monomers are ethene, propene, butene-1, hexene-1, octene-1, styrene, cyclopentene, norbornene and dicyclopentadiene. The process of the invention is in particular very suitable for application in the preparation of copolymers of carbon monoxide with ethene and for the preparation of terpolymers of carbon monoxide with ethene and an α-olefin, in particular propene.

The quantity of catalyst composition employed in the process of the invention may vary within wide limits. When a Group VIII metal-containing catalyst is employed, it is preferred to use such a quantity of catalyst composition as to comprise 10⁻⁷-10⁻³ and in particular 10⁻⁶-10⁻⁴ mol of Group VIII metal per mol of olefinically unsaturated compound to be polymerized.

The process of the invention is preferably carried out at a temperature of 25-150°C and a pressure of 2-150 bar and in particular at a temperature of 30-130°C and a pressure of 5-100 bar. The molar ratio of olefinically unsaturated compounds relative to carbon monoxide is preferably 10:1-1:10 and in particular 5:1-1:5. The process of the invention is preferably carried out in a reactor containing more than 1,000 kg diluent.

The invention will now be illustrated with the aid of the following examples:

### Example 1

An autoclave with a capacity of 100 l, provided with a stirring device, was charged with 45 kg methanol, 3 kg propene and 0.5 kg of an alternating carbon monoxide/ethene/propene terpolymer with a bulk density of 270 kg/m³ and a mean particle size of 1.5x10⁻⁴ m. After the contents of the autoclave had been brought to 80 °C, a 1:1 carbon monoxide/ethene mixture was introduced under pressure until a pressure of 45 bar was reached. Subsequently the rotational speed of the stirring device was regulated so that the power density was 0.25 kW/m³ . Finally, a catalyst solution was introduced containing:
200 ml acetone,
0.75 mmol palladium acetate,
15 mmol trifluoroacetic acid and
0.79 mmol 1,3-bis[bis(2-methoxyphenyl)phosphino]propane.

During polymerization, the pressure in the autoclave was maintained at 45 bar by injecting under pressure a 1:1 carbon monoxide/ethene mixture via a mass velocity meter. Within a brief time the mass flow attained a constant value. On the basis of that mass flow value and the quantity by weight of palladium present in the autoclave, it was calculated that the polymerization rate at a power density of 0.25 kW/m³ was 1.5 kg terpolymer/(g palladium.h).

Subsequently, by raising the rotational speed of the stirring device stepwise, the power density was successively brought to 0.5, 0.75 and 1.0 kW/m³ . After each increase of rotational speed, the mass flow attained a constant value within a brief time. From the measured values of the mass flow, it was calculated that at a power density of 0.5, 0.75 and 1.0 kW/m³, the polymerization rate amounted to 3.8, 4.0 and 4.0 kg terpolymer/(g palladium.h) respectively. The total elapsed time between the moment at which the catalyst solution was introduced into the autoclave and the moment at which the mass flow had reached a constant value at a power density of 1.0 kW/m³ was about 40 minutes. From the data collected in the course of this experiment, it could be calculated that the power density needed for approximately 90% of the maximum polymerization rate to be attained was approximately 0.43 kW/m³.

### Example 2

A carbon monoxide/ethene/propene terpolymer was prepared in substantially the same manner as in Example 1, but with the following differences:
a) The rotational speed of the stirring device was regulated so that the power density was 0.5 kW/m³ throughout the polymerization, and
b) after 24 hours, the polymerization was terminated by cooling the reaction mixture to room temperature and releasing the pressure. 7.8 kg terpolymer with a bulk density of 180 kg/m³ was obtained. The polymerization rate was 3.8 kg terpolymer/(g palladium.h).

### Example 3

A carbon monoxide/ethene/propene terpolymer was prepared in substantially the same manner as in Example 2, but with the difference that the rotational speed of the stirring device was regulated so that the power density was 0.75 kW/m³ throughout the polymerization.

8.0 kg terpolymer with a bulk density of 190 kg/m³ was obtained. The polymerization rate was 3.9 kg terpolymer/(g palladium.h).

### Example 4

A carbon monoxide/ethene/propene terpolymer was prepared in substantially the same manner as in Example 2, but with the difference that the rotational speed of the stirring device was regulated so that the power density was 1.25 kW/m³ throughout the polymerization.

8.1 kg terpolymer with a bulk density of 210 kg/m³ was obtained. The polymerization rate was 3.9 kg terpolymer/(g palladium.h).

### Example 5

A carbon monoxide/ethene/propene terpolymer was prepared in substantially the same manner as in Example 2, but with the difference that the rotational speed of the stirring device was regulated so that the power density was 2 kW/m³ throughout the polymerization.

8.2 kg terpolymer with a bulk density of 250 kg/m³ was obtained. The polymerization rate was 4.0 kg terpolymer/(g palladium.h).

### Example 6

A carbon monoxide/ethene/propene terpolymer was prepared in substantially the same manner as in Example 2, but with the difference that the rotational speed of the stirring device was regulated so that the power density was 4 kW/m³ throughout the polymerization.

8.1 kg terpolymer with a bulk density of 300 kg/m³ was obtained. The polymerization rate was 3.9 kg terpolymer/(g palladium.h).

### Example 7

A carbon monoxide/ethene/propene terpolymer was prepared in substantially the same manner as in Example 2, but with the difference that the rotational speed of the stirring device was regulated so that the power density was 8 kW/m³ throughout the polymerization.

7.8 kg terpolymer with a bulk density of 330 kg/m³ was obtained. The polymerization rate was 3.8 kg terpolymer/(g palladium.h).

### Examples 8-13

In these examples, carbon monoxide/ethene/propene terpolymers were prepared continuously in two reactors connected in series, each provided with a stirring device. The reaction product of the first reactor was fed continuously together with fresh feed components to the second reactor. The catalyst solution used contained, per 1 acetone, 1096 mg palladium acetate, 2736 mg 1,3-bis[bis(2-methoxyphenyl)phosphino]propane and 5600 mg trifluoroacetic acid. The pressure in the reactor was maintained by discharging the excess feed gases from the second reactor. In these examples, the series-connected reactors had virtually the same gas phase composition. The reaction conditions in the two reactors and the results obtained, apart from the bulk densities obtained, are stated in Table I.

Examples 8-13 were carried out consecutively in one continuous processing run. They differ from one another only in the power density applied in the second reactor. In each of the examples, the the polymerization time was 24 hours. In each of the examples, the rotational speed of the stirring device was regulated so that the power density during the polymerization had the value stated in Table II. In Table II, the bulk densities of the terpolymers obtained in the examples are also stated.

From the fact that in Examples 8-13 a virtually constant polymerization rate of 7.8 kg terpolymer/(g palladium.h) was observed, it can be concluded that the maximum polymerization rate was already achieved at a power density of 0.5 kW/m³.

Of Examples 1-13, Examples 5-7 and 11-13 are in accordance with the invention. In these examples, the polymerizations were accomplished with the use of power densities of 2-8 kW/m³ . Examples 1-4 and 8-10 fall outside the scope of the invention and have been included in the patent application for comparison. In these examples, the polymerizations were accomplished with the use of power densities of 0.25-1.25 kW/m³.

The extremely slight influence of the use of power densities of more than 0.5 kW/m³ on the polymerization rate becomes clear upon comparison of the results of the following examples.

Example 1: when the power density is increased by 100% from 0.5 to 1.0 kW/m³ , the polymerization rate increases by only approximately 5% from 3.8 to 4.0 kg polymer/(g palladium.h).

Examples 2 and 7: despite a 1,500% increase of the power density from 0.5 to 8 kW/m³ , the same polymerization rate of 3.8 kg polymer/(g palladium.h) was attained in both examples.

Examples 8 and 13: despite a 1,500% increase of the power density from 0.5 to 8 kW/m³ , a polymerization rate of 7.8 kg polymer/(g palladium.h) was attained in the second reactor in both examples.

The slight influence of raising the power density within the range below 1.5 kW/m³ on the bulk density of the polymers obtained becomes clear upon comparison of the results of the following examples.

Examples 2 and 4: when the power density is increased by 150% from 0.5 to 1.25 kW/m³ , the bulk density increases by only approximately 15% from 180 to 210 kg/m³.

Examples 8 and 10: when the power density is increased by 150% from 0.5 to 1.25 kW/m³, the bulk density increases by only approximately 15% from 130 to 150 kg/m³.

The favourable effect of using power densities higher than 1.5 kg/m³ on the bulk density of the polymers obtained becomes clear upon comparison of the results of the following examples.

Examples 5 and 6: when the power density is increased by 100% from 2 to 4 kW/m³, the bulk density increases by 20% from 250 to 300 kg/m³.

Examples 11 and 12: when the power density is increased by 100% from 2 to 4 kW/m³, the bulk density increases by approximately 50% from 210 to 310 kg/m³.

With the aid of ¹³C-NMR analysis, it was established that the carbon monoxide/ethene/propene terpolymers prepared by Examples 1-13 were made up of linear chains in which the units originating in carbon monoxide on the one hand and the units originating in ethene and propene on the other hand occur in substantially alternating order. It was further established that the polymer fragments consisting of a unit originating in carbon monoxide and a unit originating in ethene on the one hand and the polymer fragments consisting of a unit originating in carbon monoxide and a unit originating in propene on the other hand are distributed substantially randomly within the polymer chains.

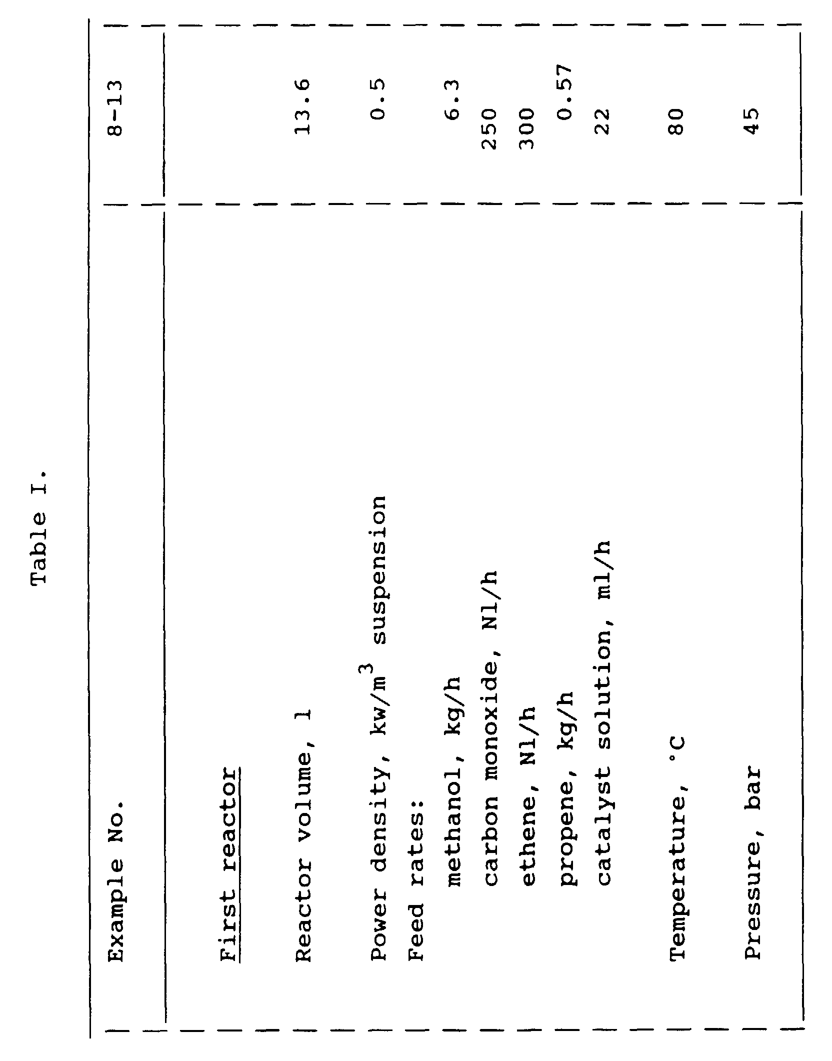

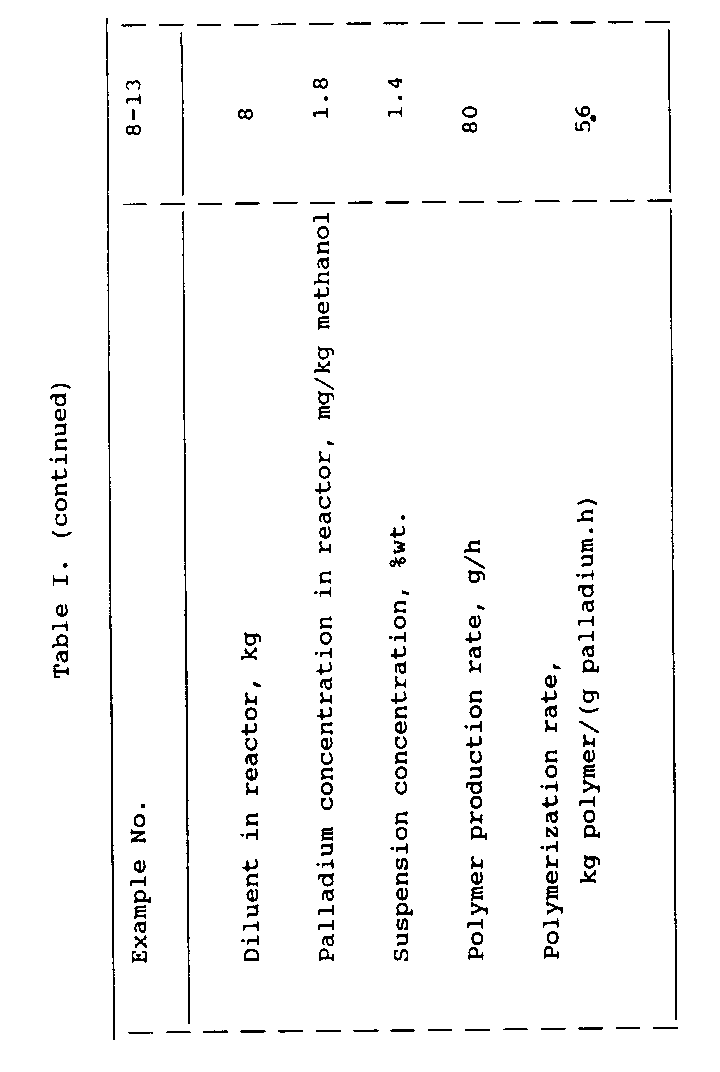

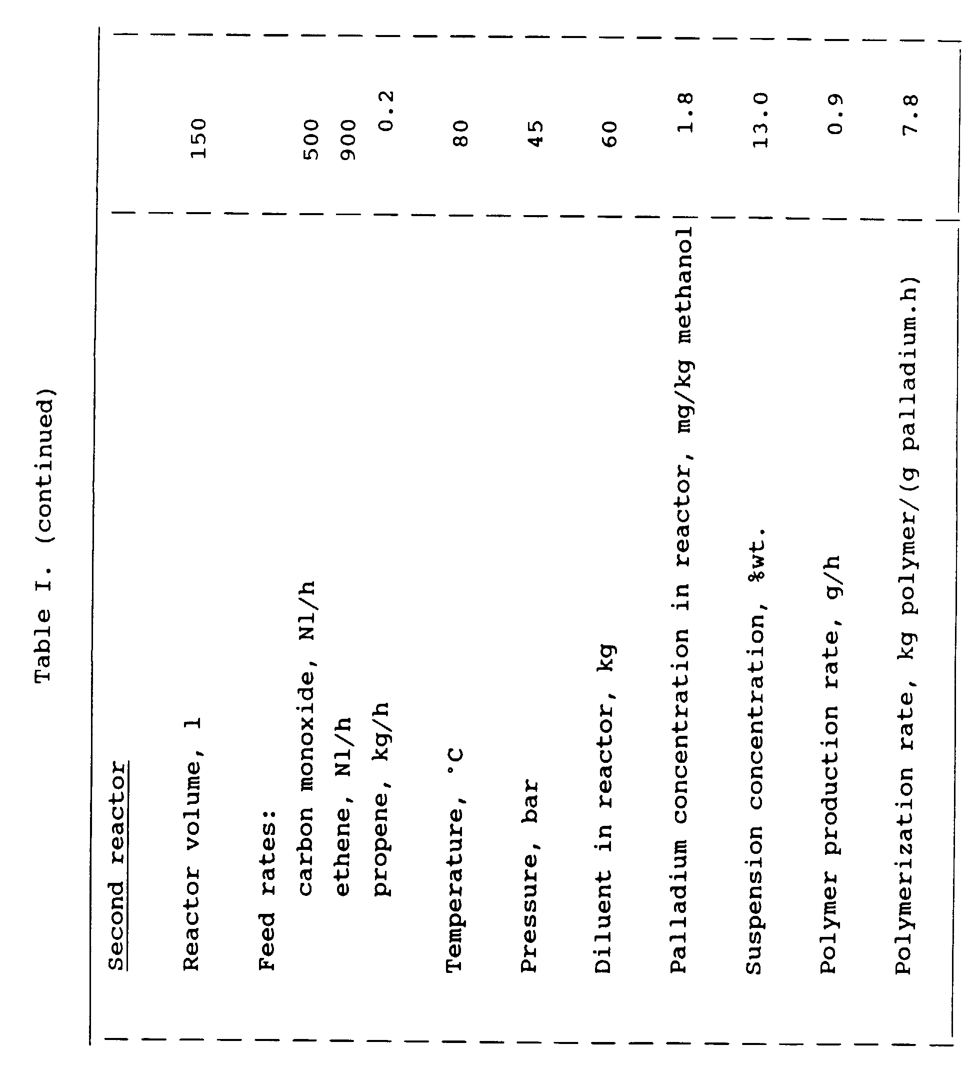

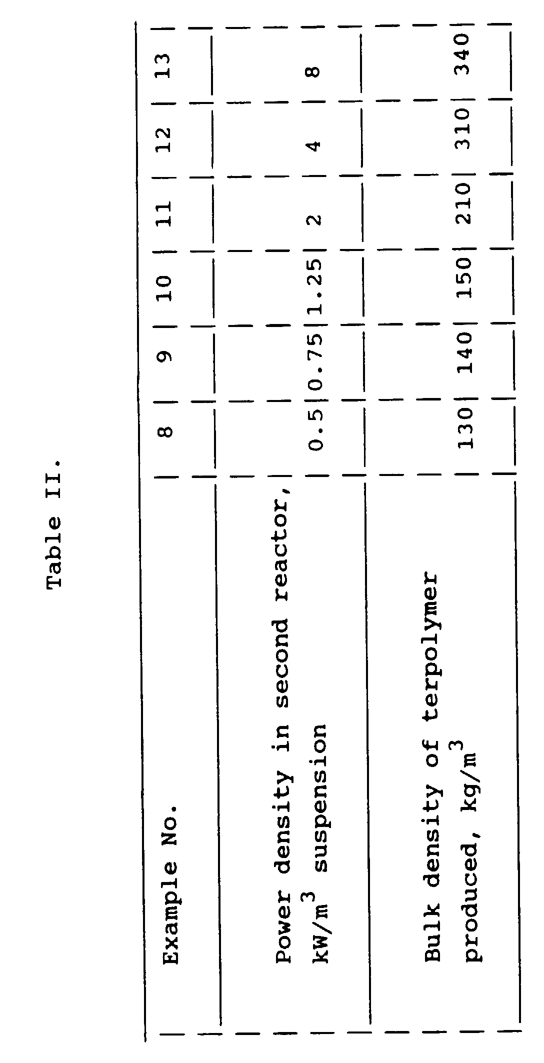

## Claims

1. Process for the preparation of polymers, wherein linear polymers of carbon monoxide with one or more olefinically unsaturated compounds, in which polymers the units originating from carbon monoxide and the units originating from the olefinically unsaturated compounds occur substantially in alternating order, are prepared by contacting the monomers at an elevated temperature and pressure with a catalyst in a reactor provided with a stirring device and containing more than 10 kg of a diluent in which the polymers are insoluble or virtually insoluble, with the power transmitted by the stirring device to the polymer suspension during polymerization amounting to more than 1.5 kW/m³ polymer suspension.

2. Process as claimed in claim 1, characterized in that the power transmitted by the stirring device to the polymer suspension during polymerization amounts to 2-15 kW/m³ polymer suspension.

3. Process as claimed in claim 2, characterized in that the power transmitted by the stirring device to the polymer suspension during polymerization amounts to 2.5-10 kW/m³ polymer suspension.

4. Process as claimed any of claims 1-3, characterized in that the polymerization is accomplished batchwise by, before contacting the monomers with the catalyst, suspending a polymer having substantially the same composition as the polymer to be prepared in the diluent in a quantity given by the formula a≥100xbxc, in which a denotes the number of grams of the polymer per litre diluent, b the number of metres of the polymer's mean particle size and c the number of kg/m³ of the polymer's bulk density.

5. Process as claimed in any of claims 1-3, characterized in that the polymerization is accomplished continuously in two or three reactors connected in series, each provided with a stirring device, and in that in at least one of the reactors the power transmitted by the stirring device to the polymer suspension during polymerization amounts to more than 1.5 kW/m³.

6. Process as claimed in any of claims 1-5, characterized in that the catalyst contains a Group VIII metal.

7. Process as claimed in claim 6, characterized in that the catalyst contains palladium as Group VIII metal and, in addition to a Group VIII metal, a bidentate ligand which can form a complex with the Group VIII metal via two phosphorus-containing, nitrogen-containing or sulphur-containing dentate groups and an anion of an acid with a pKa of less than 6.

8. Process as claimed in claim 7, characterized in that the catalyst comprises a phosphorus bidentate ligand of the general formula (R¹)₂P-R-P(R¹)₂, wherein R¹ represents an aromatic hydrocarbyl group having at least one alkoxy substituent in a position ortho in respect to the phosphoros atom and R is a bivalent organic bridging group which has at least two carbon atoms in the bridge.

9. Process as claimed in claim 7, characterized in that the catalyst contains an anion of an acid with a pKa of less than 4.

10. Process as claimed in any of claims 7 or 8, characterized in that the catalyst contains a phosphorus bidentate ligand in a quantity of 0.75-1.5 mol per mol Group VIII metal and an anion of an acid with a pka of less than 6 in a quantity of 2-50 mol per mol Group VIII metal.

11. Process as claimed in claim 9, characterized in that the catalyst contains an anion of a sulphonic acid such as para-toluenesulphonic acid or of a halocarboxylic acid such as trifluoroacetic acid.

12. Process as claimed in any of claims 1-11, characterized in that hydrocarbons such as ethene or a mixture of ethene with another olefinically unsaturated hydrocarbon such as propene are used as olefinically unsaturated compounds.

13. Process as claimed in any of claims 6-12, characterized in that per mol of olefinically unsaturated compound to be polymerized, a quantity of Group VIII metal-containing catalyst is used which contains 10⁻⁶-10⁻⁴ mol of Group VIII metal, and in that it is accomplished at a temperature of 30-130°C, a pressure of 5-100 bar and a molar ratio of olefinically unsaturated compounds to carbon monoxide of from 5:1 to 1:5.

## Patentansprüche

1. Verfahren zur Herstellung von Polymeren, bei dem man lineare Polymere aus Kohlenmonoxid und einer oder mehreren olefinisch ungesättigten Verbindungen, wobei in diesen Polymeren die vom Kohlenmonoxid stammenden Enheiten und die von den olefinisch ungesättigten Verbindungen stammenden Einheiten in weitgehend alternierender Reihenfolge auftreten, dadurch herstellt, daß man die Monomere bei erhöhter Temperatur und erhöhtem Druck in einem mit einem Rührwerk versehenen Reaktor mit mehr als 10 kg eines Verdünnungsmittels, in dem die Polymere unlöslich oder praktisch unlöslich sind, mit einem Katalysator in Berührung bringt und die bei der Polymerisation vom Rührwerk auf die Polymersuspension übertragene Leistung mehr als 1,5 kW/m³ Polymersuspension beträgt.

2. Verfahren nach Anspruch 1, dadurch gekennzeichnet, daß die bei der Polymerisation vom Rührwerk auf die Polymersuspension übertragene Leistung 2-15 kW/m³ Polymersuspension beträgt.

3. Verfahren nach Anspruch 2, dadurch gekennzeichnet, daß die bei der Polymerisation vom Rührwerk auf die Polymersuspension übertragene Leistung 2,5-10 kW/m³ Polymersuspension beträgt.

4. Verfahren nach einem der Ansprüche 1-3, dadurch gekennzeichnet, daß man die Polymerisation diskontinuierlich durchführt, indem man vor dem Inberührungbringen der Monomere mit dem Katalysator ein Polymer, dessen Zusammensetzung weitgehend der des herzustellenden Polymers entspricht, in einer Menge in dem Verdünnungsmittel suspendiert, die durch die Formel a≥100xbxc, worin a die Menge des Polymers pro Liter Verdünnungsmittel in Gramm, b die mittlere Teilchengröße des Polymers in Meter und c die Schüttdichte des Polymers in kg/m³ bedeutet, gegeben ist.

5. Verfahren nach einem der Ansprüche 1-3, dadurch gekennzeichnet, daß man die Polymerisation in zwei oder drei hintereinander geschalteten Reaktoren, die jeweils mit einem Rührwerk versehen sind, kontinuierlich durchführt und daß in mindestens einem der Reaktoren die bei der Polymerisation vom Rührwerk auf die Polymersuspension übertragene Leistung mehr als 1,5 kW/m³ beträgt.

6. Verfahren nach einem der Ansprüche 1-5, dadurch gekennzeichnet, daß der Katalysator ein Metall der Gruppe VIII enthält.

7. Verfahren nach Anspruch 6, dadurch gekennzeichnet, daß der Katalysator als Metall der Gruppe VIII Palladium und neben einem Metall der Gruppe VIII einen zweizähnigen Liganden, der mit dem Metall der Gruppe VIII über zwei Phosphor, Stickstoff oder Schwefel enthaltende zähnige Gruppen einen Komplex bilden kann, und ein Anion einer Säure mit einem pKa-Wert unter 6 enthält.

8. Verfahren nach Anspruch 7, dadurch gekennzeichnet, daß der Katalysator einen zweizähnigen Phosphorliganden der allgemeinen Formel (R¹)₂P-R-P(R¹)₂, worin R¹ für eine aromatische Kohlenwasserstoffgruppe mit mindestens einem Alkoxysubstituenten in einer ortho-Stellung zum Phosphoratom und R für eine zweiwertige organische Brückengruppe mit mindestens zwei Kohlenstoffatomen in der Brücke steht, enthält.

9. Verfahren nach Anspruch 7, dadurch gekennzeichnet, daß der Katalysator ein Anion einer Säure mit einem pKa-Wert unter 4 enthält.

10. Verfahren nach einem der Ansprüche 7 oder 8, dadurch gekennzeichnet, daß der Katalysator einen zweizähnigen Phosphorliganden in einer Menge von 0,75-1,5 mol pro Mol Metall der Gruppe VIII und ein Anion einer Säure mit einem pKa-Wert unter 6 in einer Menge von 2-50 mol pro Mol Metall der Gruppe VIII enthält.

11. Verfahren nach Anspruch 9, dadurch gekennzeichnet, daß der Katalysator ein Anion einer Sulfonsäure wie para-Toluolsulfonsäure oder einer Halogencarbonsäure wie Trifluoressigsäure enthält.

12. Verfahren nach einem der Ansprüche 1-11, dadurch gekennzeichnet, daß man als olefinisch ungesättigte Verbindungen Kohlenwasserstoffe wie Ethen oder ein Gemisch aus Ethen und einem anderen olefinisch ungesättigten Kohlenwasserstoff wie Propen einsetzt.

13. Verfahren nach einem der Ansprüche 6-12, dadurch gekennzeichnet, daß man pro Mol zu polymerisierender olefinisch ungesättigter Verbindung einen 10⁻⁶-10⁻⁴ mol Metall der Gruppe VIII enthaltenden Katalysator einsetzt und daß man es bei einer Temperatur von 30-130°C, einem Druck von 5-100 bar und einem Molverhältnis von olefinisch ungesättigten Verbindungen zu Kohlenmonoxid von 5:1 bis 1:5 durchführt.

## Revendications

1. Procédé de préparation de polymères conformément auquel on prépare des polymères linéaires du monoxyde de carbone et d'un ou plusieurs composés oléfiniquement insaturés, dans lesquels polymères les unités tirant leur origine du monoxyde de carbone et les unités tirant leur origine des composés oléfiniquement insaturés se présentent en un ordre sensiblement alternant, par la mise en contact des monomères à température et pression élevées avec un catalyseur dans un réacteur comportant un dispositif d'agitation et contenant plus de 10 kg d'un diluant dans lequel les polymères sont insolubles ou pratiquement insolubles et conformément auquel la puissance transmise par le dispositif agitateur à la suspension de polymère au cours de la polymérisation s'élève à plus de 1,5 kW/m³ de suspension de polymère.

2. Procédé suivant la revendication 1, caractérisé en ce que la puissance transmise par le dispositif agitateur à la suspension de polymère au cours de la polymérisation s'élève à 2-15 kW/m³ de suspension de polymère.

3. Procédé suivant la revendication 2, caractérisé en ce que la puissance transmise par le dispositif agitateur à la suspension de polymère au cours de la polymérisation s'élève à 2,5-10 kW/m³ de suspension de polymère.

4. Procédé suivant l'une quelconque des revendications 1 à 3, caractérisé en ce que l'on entreprend la polymérisation en discontinu en mettant en suspension, avant la mise en contact des monomères avec le catalyseur, un polymère possédant sensiblement la même composition que le polymère à préparer dans le diluant en une proportion donnée par la formule a≥100xbxc, dans laquelle a indique le nombre de grammes de polymère par litre de diluant, b indique le nombre de mètre du calibre moyen du polymère et c indique le nombre de kg/m³ de masse volumique apparente du polymère.

5. Procédé suivant l'une quelconque des revendications 1 à 3, caractérisé en ce que l'on entreprend la polymérisation en continu dans deux ou trois réacteurs raccordés en série, chacun d'entre eux étant pourvu d'un dispositif agitateur et en ce que, dans au moins l'un des réacteurs, la puissance transmise par le dispositif agitateur à la suspension de polymère au cours de la polymérisation s'élève jusqu'à plus de 1,5 kW/m³.

6. Procédé suivant l'une quelconque des revendications 1 à 5, caractérisé en ce que le catalyseur contient un métal du groupe VIII.

7. Procédé suivant la revendication 6, caractérisé en ce que le catalyseur contient du palladium à titre de métal du groupe VIII et, en plus d'un métal du groupe VIII, un ligand bidentate qui peut former un complexe avec le métal du groupe VIII par l'intermédiaire de deux groupes dentate contenant du phosphore, contenant de l'azote, ou contenant du soufre et un anion d'un acide possédant un pKa inférieur à 6.

8. Procédé suivant la revendication 7, caractérisé en ce que le catalyseur comprend un ligand bidentate phosphoré de la formule générale (R¹)₂P-R-P(R¹)₂, dans laquelle R¹ représente un radical hydrocarbyle aromatique possédant au moins un substituant du type alcoxy en une position ortho par rapport à l'atome de phosphore et R représente un groupe de pontage organique bivalent comportant au moins deux atomes de carbone dans le pont.

9. Procédé suivant la revendication 7, caractérisé en ce que le catalyseur contient un anion d'un acide qui possède un pKa inférieur à 4.

10. Procédé suivant l'une quelconque des revendications 7 ou 8, caractérisé en ce que le catalyseur contient un ligand bidentate phosphoré en une proportion de 0,75 à 1,5 mole par mole de métal du groupe VIII et un anion d'un acide qui possède un pKa inférieur à 6 en une proportion de 2 à 50 moles par mole de métal du groupe VIII.

11. Procédé suivant la revendication 9, caractérisé en ce que le catalyseur contient un anion d'un acide sulfonique, comme l'acide para-toluènesulfonique, ou d'un acide halocarboxylique, comme l'acide trifluoracétique.

12. Procédé suivant l'une quelconque des revendications 1 à 11, caractérisé en ce que des hydrocarbures comme l'éthène ou un mélange d'éthène et d'un autre hydrocarbure oléfiniquement insaturé, comme le propène, sont utilisés à titre de composés oléfiniquement insaturés.

13. Procédé suivant l'une quelconque des revendications 6 à 12, caractérisé en ce que, par mole de composé oléfiniquement insaturé à polymériser, on utilise une proportion de catalyseur contenant un métal du groupe VIII qui contient 10⁻⁶-10⁻⁴ mole de métal du groupe VIII et en ce qu'on l'entreprend à une température de 30 à 130°C, sous une pression de 5 à 100 bars et avec un rapport molaire des composés oléfiniquement insaturés au monoxyde de carbone de 5:1 à 1:5.
